# EUROPÄISCHE PATENTSCHRIFT

(11) **EP 3 196 973 B1**
(45) Veröffentlichungstag und Bekanntmachung des Hinweises auf die Patenterteilung: **21.12.2022**
(21) Anmeldenummer: 17151543.0
(22) Anmeldetag: 16.01.2017
(51) Int. Cl.: H01M 10/48, H01M 50/204

(54) **TRAKTIONSBATTERIE FÜR FLURFÖRDERZEUG**
TRACTION BATTERY FOR INDUSTRIAL TRUCK
BATTERIE DE TRACTION POUR CHARIOT DE MANUTENTION

(30) Priorität: 20.01.2016 DE 102016100922
(43) Veröffentlichungstag der Anmeldung: 26.07.2017
(73) Patentinhaber: STILL GmbH, 22113 Hamburg (DE)
(72) Erfinder: Mittmann, Heribert, 22145 Hamburg (DE); Wede, Marc, 22941 Bargteheide (DE); Heilen, Thorsten, 22393 Hamburg (DE)
(74) Vertreter: Patentship Patentanwaltgesellschaft

(56) Entgegenhaltungen:
- CN-A- 104 241 706
- US-A1- 2008 118 819

## Beschreibung

Die Erfindung betrifft eine Traktionsbatterie eines Flurförderzeugs. Insbesondere betrifft die Erfindung eine Traktionsbatterie eines Flurförderzeugs mit einem Batterietrog, einer Mehrzahl von Batteriezellen und einer Kühleinrichtung in Form einer zumindest teilweise die Oberseite der Batteriezellen abdeckenden Luftführungshaube mit mindestens einer Lufteintrittsöffnung zur Führung eines Kühlluftstroms.

Für den Betrieb von batterie-elektrisch angetriebenen Flurförderzeugen, wie etwa beispielsweise Gabelstaplern, kommen Traktionsbatterien zum Einsatz, die im Regelfall als austauschbare Batterien in ein Batteriefach eingesetzt und, sobald sie entladen sind, gegen eine aufgeladene Traktionsbatterie ersetzt werden können. Im Regelfall sind diese Traktionsbatterien als Blei-Säurebatterie ausgeführt. Häufig wird auch eine Blei-Geltechnologie eingesetzt, bei der ein Elektrolyt der Batteriezellen chemisch gebunden eine gelartige Konsistenz aufweist.

Solche Traktionsbatterien sind so aufgebaut, dass mehrfach in Reihe verschaltete, standardisierte Batteriezellen in einem Batterietrog angeordnet sind und durch die Reihenschaltung eine geforderte Spannung erreicht wird. Der Batterietrog kann mit entsprechenden Transportmitteln, wie etwa einem weiteren Gabelstapler oder Flurförderzeug, transportiert werden und schützt die Batteriezellen vor Beschädigungen.

Blei-Säurebatterien als Traktionsbatterien sind seit Jahrzehnten in vielen Einsatzbereichen bewährt. Nachteilig an diesem Stand der Technik ist jedoch, dass diese Batterien einen relativ hohen Innenwiderstand aufweisen, der beim Entladen wie auch beim Aufladen zu einer hohen Wärmeentwicklung führt. Bei Traktionsbatterien mit sehr großer Nennkapazität und einem entsprechend ungünstigen Verhältnis der Oberfläche zu dem dann zwangsläufig großen Volumen ergeben sich erhebliche Wärmekonzentrationen durch Abwärme. In der Praxis weisen die Traktionsbatterie dann auch ein sehr ungünstiges Abkühlverhalten auf aufgrund der des bereits genannten ungünstigen Verhältnisses von Oberfläche zu Volumen.

Bei Traktionsbatterien mit großer Kapazität und Ausführung als Blei-Säurebatterie ist es dann oftmals nicht mehr möglich, wie üblich acht oder mehr Stunden pro Tag die Traktionsbatterie durchgehend einzusetzen, sondern es müssen längere Auskühlphasen vorgesehen werden, damit nicht unzulässig hohe Temperaturen der Zellen erreicht werden. Dabei kann ein Bediener den Ladezustand einer Traktionsbatterie oftmals durch eine Anzeige im Flurförderzeug erkennen. Ebenso kann der Ladezustand erkannt werden, wenn die Traktionsbatterie mit einem Ladegerät verbunden ist und dieses hierfür eine Anzeige aufweist, sowohl bei einem externen Laden der Traktionsbatterie, aber auch wenn diese im Flurförderzeug verbleiben geladen wird.

Nachteilig ist jedoch, dass ein Bediener die interne Temperatur, insbesondere im Kernbereich einer Traktionsbatterie, nicht erkennen kann. Eine zu hohe Temperatur der Batteriezellen führt jedoch zu einer deutlichen Verringerung der Lebensdauer.

Im Stand der Technik sind Kühlvorrichtungen zur Kühlung der Traktionsbatterie bekannt. Eine bekannte Variante ist eine Kühlung durch einen Luftstrom vorzusehen, der in einem Batteriefach des Flurförderzeugs über die Traktionsbatterie hinweg geleitet wird. Es kann Umgebungsluft des Flurförderzeugs angesagt und über die Traktionsbatterie geleitet werden. Hierfür muss jedoch das Flurförderzeug entsprechend eingerichtet sein. Es ist daher auch bekannt, an der Traktionsbatterie selbst Lüfter und Luftführungen vorzusehen, die Luft aus dem Batteriefach selbst ansaugen. Um dabei einen thermischen Kurzschluss zu vermeiden, bei dem erwärmte ausgeblasene Luft wieder angesaugt wird, sind im Stand der Technik Luftführungen bekannt, auch bezeichnet als Ansaugkasten. Durch diese Luftführungen kann gezielt eine Ansaugung von durch das Flurförderzeug nicht erwärmter Luft erfolgen, beispielsweise aus Seitenbereichen oder Bereichen, die relativ große Öffnungsquerschnitte zur Umgebung aufweisen, etwa im Bereich einer Batteriefachtür. Durch flächige, waagerecht angeordnete Elemente, etwa ein waagerechtes Blech oder eine Kunststofffläche , kann eine Abschirmung gegenüber der durch die Batterie erwärmten Luft erfolgen, die aufsteigt, sich oberhalb findet und zu einem thermischen Kurzschluss führen könnte. Zusätzlich können solche Luftführungen auch einen Wetterschutz gegen Feuchtigkeit für empfindliche Elemente bieten, beispielsweise eine Steuerungsvorrichtung der Batterie.

Eine solche, auf die Traktionsbatterie in einem Batterietrog oben eingesetzte Luftführung ist aus der DE 10 2014 106 647 A1 bekannt, die einen Traktionsbatterie eines Flurförderzeugs offenbart, bei der eine den Batterietrogs abdeckende Haube vorgesehen ist, die über mindestens eine Lufteintrittsöffnung und mindestens eine Luftluftaustrittsöffnung verfügt um dadurch eine Kühlluftführung zwischen der Haube der Oberseite der Batteriezellen zu ermöglichen.

Aus der CN 104 241 706 A ist eine Batterie-Gruppe bekannt, welche Batterie-Zellen umfasst, die jeweils eine Batterie-Abdeckung mit einer Kavität und einen Batterie-Körper mit einer positiven und einer negativen Anschlussklemme aufweisen.

Aus der US 2008/118819 A1 ist ein Batteriesystem mit einer Vielzahl von stapelbaren Batteriemodulen bekannt, die jeweils eine Datenerfassungsplatte aufweisen mit einer Verbindungsplatte, in der mindestens ein Temperatursensor integriert ist.

Der vorliegenden Erfindung liegt die Aufgabe zugrunde, eine Traktionsbatterie für ein Flurförderzeug zur Verfügung zu stellen, die die oben genannten Nachteile vermeidet und mit der eine schonende Behandlung der Traktionsbatterie sowie eine Verlängerung der Lebensdauer ermöglicht wird.

Diese Aufgabe wird durch eine Traktionsbatterie für ein Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einer Traktionsbatterie eines Flurförderzeugs mit einem Batterietrog, einer Mehrzahl von Batteriezellen und einer Kühleinrichtung in Form einer zumindest teilweise die Oberseite der Batteriezellen abdeckenden Luftführungshaube mit mindestens einer Lufteintrittsöffnung zur Führung eines Kühlluftstroms, eine optische Anzeige an der Luftführungshaube vorgesehen ist, die die Messwerte mindestens eines im Inneren der Traktionsbatterie zwischen den Batteriezellen angeordneten Temperatursensors anzeigt.

Der mindestens eine Temperatursensor wird dabei beispielsweise möglichst im Kern des Batterietrogs bzw. in der Mitte des Batterietrogs angeordnet. Zur Verbesserung der Erfassung können auch mehrere Temperatursensoren verteilt angeordnet werden. In diesem Bereich ist die Wärmeableitung am schlechtesten und können die höchsten Temperaturen entstehen. Durch die Anzeige kann der Bediener den thermischen Zustand der Traktionsbatterie erkennen und entscheiden, ob die Traktionsbatterie eingesetzt, geladen werden kann, oder erst eine Abkühlpause benötigt. Bei mehreren zur Verfügung stehenden, geladenen Traktionsbatterien kann eine mit der niedrigsten Temperatur ausgesucht werden. Dadurch kann die Lebensdauer der Traktionsbatterie verlängert werden. Durch die Integration der Anzeige in die Luftführungshaube kann diese auch in Hinsicht auf die Platzverhältnisse besonders vorteilhaft untergebracht werden. Die Luftführungshaube ist im Regelfall so ausgeführt, dass diese innerhalb der Batteriekontur bzw. innerhalb des Raums unter der Oberkante des Batterietrogs sich befindet und somit bei der Handhabung der Traktionsbatterie vor mechanischen Beschädigungen geschützt ist. Dabei wird insbesondere durch die Luftführungshaube seitlich an dem Batterietrog eine Öffnung nach oben abgeschirmt, wobei über diese Lufteintrittsöffnung der Luftstrom auf die Oberseite der Batterie geleitet werden kann, ohne dass es sofort zu einer Umwälzung und einem thermischen Kurzschluss kommt.

Die optische Anzeige kann verschiedene Farben anzeigen.

Vorteilhaft besteht die Anzeige aus drei Leuchten, bevorzugt LED, mit verschiedenen Farben, insbesondere in einer ampelfarbigen Anordnung rot, gelb und grün.

Eine solche Anordnung ist zweckmäßig, insbesondere ähnlich einer Ampel, da jeder Bediener diese intuitiv versteht. Die Zuordnung der Temperaturbereiche ist dann leicht verständlich, da grün einen zulässigen Bereich verdeutlicht, gelb einen kritischen und rot einen unzulässig hohen Temperaturbereich. Eine weitere denkbare Alternative wäre eine Anzeige von rot, rot/gelb, gelb, gelb/grün und grün, um eine weitere Ausdifferenzierung zu ermöglichen.

Die Anzeige kann aus einer Leuchte besteht, die in mehreren Farben aufleuchten kann, bevorzugt einer LED.

Grundsätzlich kann die Anzeige auch mit weiteren elektronischen Komponenten und Steuereinheiten, beispielsweise einer Batteriesteuerung, oder sonstigen der Batterie bzw. der Luftführungshaube zugeordneter Elektronik kombiniert werden und in diese integriert werden.

Vorteilhaft ist die optische Anzeige eine Balkenanzeige.

Die Anzeige kann auch mit Symbolen bzw. Piktogrammen ergänzt werden. Ebenso ist es denkbar, dass eine Leuchtanzeige bzw. LED durch Blinken und insbesondere die Blinkfrequenz den Temperaturwert verdeutlicht.

In einer günstigen Ausgestaltung ist die optische Anzeige so an der Luftführungshaube angeordnet, dass bei einer geöffneten Batterietür und/oder durch eine Aussparung der Batterietür diese abgelesen werden kann, wenn die Traktionsbatterie in ein Flurförderzeug eingesetzt ist.

In einer günstigen Ausgestaltung ist mindestens ein Lüfter zur Erzeugung des Luftstroms vorgesehen.

Der Lüfter kann dabei als fest mit der Luftführungshaube verbundenes Teil ausgebildet, aber auch in den Batterietrog integriert sein. Zusätzlich kann eine Steuerung vorgesehen sein, die den Lüfter regelt.

Vorteilhaft ist der Lüfter temperaturabhängig durch den Temperatursensor gesteuert ist.

Vorteilhaft kann der Lüfter über eine drahtlose oder kabelgebundene Signalverbindung von einem Ladegerät und/oder dem Flurförderzeug gesteuert werden.

Damit wird der Energieverbrauch des Lüfters minimiert und dieser nur eingesetzt, wenn dies erforderlich ist. Es ist natürlich auch denkbar, den Lüfter dauernd laufen zu lassen. Insbesondere aber kann auch eine temperaturabhängige Regelung dahingehend erfolgen, dass die Drehzahl und Luftfördermenge des Lüfters geregelt wird. Ganz allgemein kann auch eine drahtlose-oder kabelgebundene Signalverbindung zwischen einer Elektronik oder Steuerung der Traktionsbatterie und dem Flurförderzeug bestehen. Dies ermöglicht es beispielsweise, Hinweise und Handlungsanweisungen im Falle einer zu hohen Temperatur der Traktionsbatterie für einen Bediener auf einer Anzeigevorrichtung des Flurförderzeugs darzustellen. Eine solche Kommunikation kann über einen CAN-Bus ausgeführt sein. Es ist denkbar, abhängig von der Temperatur der Traktionsbatterie Maßnahmen zur Beschränkung von Fahrfunktionen und/oder Lasthandhabungsfunktionen vorzunehmen, um eine weitere Erwärmung durch den Entladestrom zu begrenzen.

Die Luftführungshaube kann einen Luftfilter für die Kühlluft aufweisen.

Eine sich durch einen beständigen Kühlluftstrom ergebende Verschmutzungsgefahr kann dadurch vermieden werden. Es ist auch möglich, bei der Luftführungshaube eine gezielte Verwirbelung vorzusehen durch die Formgebung. Dies verhindert eine laminare Strömung und bewirkt eine bessere Kühlung. Ebenso kann eine Mengenverteilung des Luftstroms durch Lamellen erfolgen. Schließlich ist es auch denkbar, durch die Ausgestaltung der Luftführungshaube eine Reduzierung der Schallemissionen zu erreichen.

Weitere Vorteile und Einzelheiten der Erfindung werden anhand des in der schematischen Figur dargestellten Ausführungsbeispiels näher erläutert. Die Traktionsbatterie 1 besteht aus einem Batterietrog 2, in dem eine Mehrzahl von Batteriezellen 3 angeordnet sind. An einer Seite des Batterietrogs 2 ist eine Luftführungshaube 4 angeordnet, die die Oberseite der Batteriezellen 3 in einem Randbereich überdeckt. Eine Lufteintrittsöffnung 5 ist an der Seite des Batterietrogs angeordnet und Kühlluft kann durch diese unter die Luftführungshaube geleitet werden. An einer Seite der Luftführungshaube 4 ist eine integrierte Elektronik 6 angeordnet, über die drei Leuchten 7 in den Ampelfarben rot, gelb und grün als optische Anzeige 11 angesteuert werden. Abhängig von dem Signal eines hier nicht dargestellten Temperatursensors, der zwischen den Batteriezellen im Zentrum des Batterietrogs 2 angeordnet ist, steuert die Elektronik 6 eine grüne Leuchte 8 an im Fall eines zulässigen Temperaturbereichs, eine gelbe Leuchte 9 bei einer kritischen Temperatur und eine rote Leuchte 10 bei einer unzulässig hohen Temperatur.

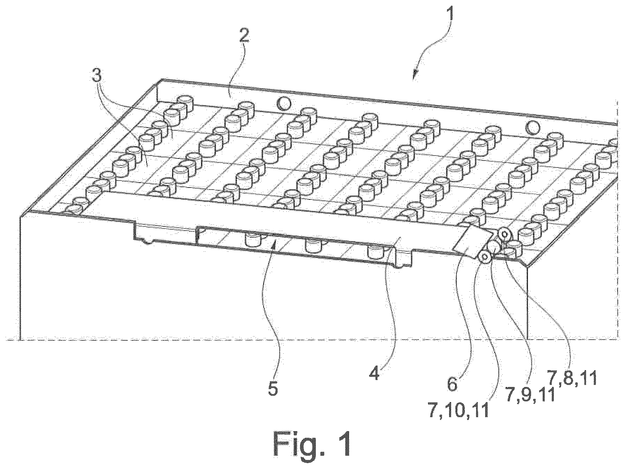

## Patentansprüche

1. Traktionsbatterie eines Flurförderzeugs mit einem Batterietrog (2), einer Mehrzahl von Batteriezellen (3) und einer Kühleinrichtung in Form einer zumindest teilweise die Oberseite der Batteriezellen abdeckenden Luftführungshaube (4) mit mindestens einer Lufteintrittsöffnung (5) zur Führung eines Kühlluftstroms,
**dadurch gekennzeichnet,**
**dass** eine optische Anzeige (11) an der Luftführungshaube (4) vorgesehen ist, die die Messwerte mindestens eines im Inneren der Traktionsbatterie (1) zwischen den Batteriezellen (3) angeordneten Temperatursensors anzeigt.

2. Traktionsbatterie nach Anspruch 1,
**dadurch gekennzeichnet,**
**dass** die optische Anzeige (11) verschiedene Farben anzeigen kann.

3. Traktionsbatterie nach Anspruch 2,
**dadurch gekennzeichnet,**
**dass** die Anzeige (11) aus drei Leuchten (7), bevorzugt LED, mit verschiedenen Farben besteht, insbesondere in einer ampelfarbigen Anordnung rot, gelb und grün.

4. Traktionsbatterie nach Anspruch 2,
**dadurch gekennzeichnet,**
**dass** die Anzeige (11) aus einer Leuchte (7) besteht, die in mehreren Farben aufleuchten kann, bevorzugt einer LED.

5. Traktionsbatterie nach einem der Ansprüche 1 bis 4,
**dadurch gekennzeichnet,**
**dass** die optische Anzeige (11) eine Balkenanzeige ist.

6. Traktionsbatterie nach einem der Ansprüche 1 bis 5,
**dadurch gekennzeichnet,**
**dass** die optische Anzeige (11) so an der Luftführungshaube (4) angeordnet ist, dass bei einer geöffneten Batterietür des Flurförderzeugs und/oder durch eine Aussparung der Batterietür des Flurförderzeugs diese abgelesen werden kann, wenn die Traktionsbatterie (1) in dem Flurförderzeug eingesetzt ist.

7. Traktionsbatterie nach einem der Ansprüche 1 bis 6,
**dadurch gekennzeichnet,**
**dass** mindestens ein Lüfter zur Erzeugung eines Luftstroms vorgesehen ist.

8. Traktionsbatterie nach Anspruch 7,
**dadurch gekennzeichnet,**
**dass** der Lüfter temperaturabhängig durch den Temperatursensor gesteuert ist.

9. Traktionsbatterie nach Anspruch 7 oder 8,
**dadurch gekennzeichnet,**
**dass** der Lüfter über eine drahtlose oder kabelgebundene Signalverbindung von einem Ladegerät und/oder dem Flurförderzeug gesteuert werden kann.

10. Traktionsbatterie nach einem der Ansprüche 1 bis 9,
**dadurch gekennzeichnet,**
**dass** die Luftführungshaube (4) einen Luftfilter für die Kühlluft aufweist.

## Claims

1. Traction battery of an industrial truck, comprising a battery tray (2), a plurality of battery cells (3) and a cooling device in the form of an air guide shroud (4) which at least partially covers the top side of the battery cells and has at least one air inlet opening (5) for guiding a cooling air stream,
**characterized**
**in that** an optical display (11) is provided on the air guide shroud (4), which optical display displays the measurement values of at least one temperature sensor arranged between the battery cells (3) in the interior of the traction battery (1).

2. Traction battery according to Claim 1,
**characterized**
**in that** the optical display (11) can display different colours.

3. Traction battery according to Claim 2,
**characterized**
**in that** the display (11) consists of three lamps (7), preferably LEDs, with different colours, in particular in a traffic light-coloured arrangement red, yellow and green.

4. Traction battery according to Claim 2,
**characterized**
**in that** the display (11) consists of one lamp (7) which can light up in several colours, preferably an LED.

5. Traction battery according to one of Claims 1 to 4,
**characterized**
**in that** the optical display (11) is a bar display.

6. Traction battery according to one of Claims 1 to 5,
**characterized**
**in that** the optical display (11) is arranged on the air guide shroud (4) such that said optical display can be read when a battery compartment door of the industrial truck is open and/or through a cutout in the battery compartment door of the industrial track when the traction battery (1) is inserted in the industrial truck.

7. Traction battery according to one of Claims 1 to 6,
**characterized**
**in that** at least one fan is provided for generating an air stream.

8. Traction battery according to Claim 7,
**characterized**
**in that** the fan is controlled in a temperature-dependent manner by the temperature sensor.

9. Traction battery according to Claim 7 or 8,
**characterized**
**in that** the fan can be controlled by a charging device and/or the industrial truck via a wireless or wired signal connection.

10. Traction battery according to one of Claims 1 to 9,
**characterized**
**in that** the air guide shroud (4) has an air filter for the cooling air.

## Revendications

1. Batterie de traction d'un chariot de manutention avec un bac de batterie (2), une pluralité de cellules de batterie (3) et un dispositif de refroidissement sous la forme d'un capot de guidage d'air (4) recouvrant au moins partiellement le côté supérieur des cellules de batterie avec au moins une ouverture d'entrée d'air (5) pour guider un courant d'air de refroidissement,
**caractérisée en ce que**
un indicateur optique (11) est prévu sur le capot de guidage d'air (4), lequel indique les valeurs de mesure d'au moins un capteur de température agencé à l'intérieur de la batterie de traction (1) entre les cellules de batterie (3).

2. Batterie de traction selon la revendication 1,
**caractérisée en ce que**
l'indicateur optique (11) peut indiquer différentes couleurs.

3. Batterie de traction selon la revendication 2,
**caractérisée en ce que**
l'indicateur (11) est constitué de trois voyants (7), de préférence des LED, de couleurs différentes, notamment selon un agencement de couleurs de feux de circulation rouge, jaune et vert.

4. Batterie de traction selon la revendication 2,
**caractérisée en ce que**
l'indicateur (11) est constitué d'un voyant (7) qui peut s'allumer en plusieurs couleurs, de préférence une LED.

5. Batterie de traction selon l'une quelconque des revendications 1 à 4,
**caractérisée en ce que**
l'indicateur optique (11) est un indicateur à barres.

6. Batterie de traction selon l'une quelconque des revendications 1 à 5,
**caractérisée en ce que**
l'indicateur optique (11) est agencé sur le capot de guidage d'air (4) de telle sorte que celui-ci peut être lu lorsque la porte de batterie du chariot de manutention est ouverte et/ou à travers un évidement de la porte de batterie du chariot de manutention, lorsque la batterie de traction (1) est installée dans le chariot de manutention.

7. Batterie de traction selon l'une quelconque des revendications 1 à 6,
**caractérisée en ce que**
au moins un ventilateur est prévu pour générer un courant d'air.

8. Batterie de traction selon la revendication 7,
**caractérisée en ce que**
le ventilateur est commandé par le capteur de température en fonction de la température.

9. Batterie de traction selon la revendication 7 ou 8,
**caractérisée en ce que**
le ventilateur peut être commandé par le biais d'une liaison de signalisation sans fil ou câblée depuis un appareil de chargement et/ou le chariot de manutention.

10. Batterie de traction selon l'une quelconque des revendications 1 à 9,
**caractérisée en ce que**
le capot de guidage d'air (4) présente un filtre à air pour l'air de refroidissement.
